## Europäisches Patentamt

## European Patent Office
## Office européen des brevets

(19)

(11) Veröffentlichungsnummer: **0 026 377**
A2

(12) **EUROPÄISCHE PATENTANMELDUNG**

(21) Anmeldenummer: **80105476.8**

(22) Anmeldetag: **12.09.80**

(51) Int. Cl.³: **G 06 F 11/20**
**G 06 F 11/18**

(30) Priorität: **28.09.79 DE 2939487**

(43) Veröffentlichungstag der Anmeldung:
**08.04.81 Patentblatt 81/14**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Schmittner, Ernst, Dipl-Math.**
**Zwiedineckstrasse 40**
**D-8000 München 50(DE)**

(72) Erfinder: **Birzele, Paul, Dipl.-Ing.**
**Schumacherring 25**
**D-8000 München 83(DE)**

(72) Erfinder: **Buchmann, Klaus, Dipl.-Ing.**
**Emdenstrasse 76**
**D-8000 München 83(DE)**

(72) Erfinder: **Geitz, Gerhard, Dipl.-Math.**
**Marschnerstrasse 41g**
**D-8000 München 60(DE)**

(72) Erfinder: **Will, Bernhard, Dipl.-Math.**
**Aubing-Ost-Strasse 79**
**D-8000 München 60(DE)**

(72) Erfinder: **Beifuss, Wolfgang, Dipl.-Ing.**
**Breithornstrasse 2**
**D-8000 München 82(DE)**

(54) **Rechnerarchitektur auf der Basis einer Multi-Mikrocomputerstruktur als fehlertolerantes System.**

(57) Der vorliegenden Erfindung liegt die Aufgabe zugrunde, eine Rechnerarchitektur zu schaffen, die ein fehlertolerantes Arbeiten gewährleistet. Der Ausfall einer Komponente oder Fehler in einer Komponente des Gesamtsystems führen nicht zum Ausfall des Gesamtsystems. Definierte Ersatzelemente, die nur bei Bedarf zum Einsatz kommen, oder Doppelelemente, die nur zur Parallelausführung spezifischer Aufgaben eingesetzt werden, sind bei der erfindungsgemäßen Rechnerarchitektur nicht vorgesehen. Ausgenommen davon sind die an den Schnittstellen zwischen der Rechnerarchitektur und der Peripherie bzw. der Rechnerarchitektur und der Benutzerebene vorgesehenen Schnittstelleneinrichtungen.

Die Aufgabe wird durch eine ringförmige, teilvermaschte Anordnung von Mikrocomputern gelöst, bei der jeder Mikrocomputer die Funktionen des ihm im Ring benachbarten Mikrocomputers überwacht. Prinzipiell kann jeder Mikrocomputer die Aufgaben aller anderen Mikrocomputer übernehmen.

EP 0 026 377 A2

SIEMENS AKTIENGESELLSCHAFT

Berlin und München

Unser Zeichen

79 P 7 1 8 3 EUR

Rechnerarchitektur auf der Basis einer Multi-Mikrocomputerstruktur als fehlertolerantes System.

Die vorliegende Erfindung betrifft eine Rechnerarchitektur auf der Basis einer Multi-Mikrocomputerstruktur als fehlertolerantes System, bei der mehrere Mikrocomputer vorgesehen sind, die sich gegenseitig vertreten können, und bei der zur Steuerung der Aufgabenverteilung für die Mikrocomputer das Prinzip der "2 von 3"-Entscheidung verwendet wird.

Es ist bekannt, rechnergesteuerte Systeme im Hinblick auf mögliche Rechnerausfälle mit zwei oder mehr Rechnern, die sich gegenseitig aufgabenmäßig vertreten können und deren Funktionsergebnisse ständig auf Gleichwertigkeit überwacht werden, einzusetzen. Im Falle einer Rechnerstörung bzw. einer zunächst undefinierten Unstimmigkeit der betreffenden Funktionsergebnisse wird bei solchen rechnergesteuerten Systemen mit Hilfe einer zentral angeordneten Umschalt- oder Ersatzschalt-Einrichtung eine Aufgabenumverteilung vorgenommen. Systeme dieser Art haben den Nach-

Pap 1 EK / 26.9.1979

teil, daß diese zentrale Umschalt- bzw. Ersatzschalteeinrichtung ebenfalls ausfallgefährdet ist, so daß im ungünstigsten Fall das Gesamtsystem ausfallen kann.

Der vorliegenden Erfindung liegt die Aufgabe zugrunde, eine Rechnerarchitektur zu schaffen, die ein fehlertolerantes Arbeiten gewährleistet. Der Ausfall einer Komponente oder Fehler in einer Komponente des Gesamtsystems führen nicht zum Ausfall des Gesamtsystems. Definierte Ersatzelemente, die nur bei Bedarf zum Einsatz kommen, oder Doppelelemente, die nur zur Parallelausführung spezifischer Aufgaben eingesetzt werden, sind bei der erfindungsgemäßen Rechnerarchitektur nicht vorgesehen. Ausgenommen davon sind die an den Schnittstellen zwischen der Rechnerarchitektur und der Peripherie bzw. der Rechnerarchitektur und der Benutzerebene vorgesehenen Schnittstelleneinrichtungen.

Die der Erfindung zugrunde liegende Aufgabe wird durch eine Rechnerarchitektur auf der Basis einer Multi-Mikrocomputerstruktur als fehlertolerantes System gelöst, bei der mehrere Mikrocomputer vorgesehen sind, die sich gegenseitig vertreten können, und bei der zur Steuerung der Aufgabenverteilung für die Mikrocomputer das Prinzip der "2 von 3"-Entscheidung verwendet wird.

Die erfindungsgemäße Rechnerarchitektur ist dadurch gekennzeichnet, daß die Mikrocomputer in einem teilvermaschten Ring angeordnet sind, derart, daß jeweils ein Datenaustausch zwischen zwei in dem Ring benachbarten Mikrocomputern und/oder zwischen einem beliebigen Mikrocomputer und einem in dem Ring relativ zu diesen genannten Mikrocomputer an übernächster Stelle angeordneten weiteren Mikrocomputer durchführbar ist, und daß jeweils an den Schnittstellen "Rechner/Benutzer" und "Rechner/Peripherie" drei jeweils eingangsseitig mit allen Peripherie-Leitungen bzw. drei jeweils eingangsseitig mit allen Benutzer-Leitungen verbundene Gerätekontroller vorgesehen sind, die jeweils ausgangsseitig über einen vorzugsweise als einstufiges Koppelnetzwerk ausgeführten passiven Peripherie-Schalter mit den Eingabe-/Ausgabe-Schnittstellen aller Mikrocomputer verbindbar sind, wobei die jeweilige Konfiguration "Mikrocomputer/Peripherie" bzw. "Mikrocomputer/Benutzer" mittels einer bei auftretenden Datenübertragungsfehlern durchzuführenden "2 von 3"-Mehrheitsentscheidung festlegbar ist.

Die Erfindung bietet den Vorteil, daß fehlerhaft arbeitende Komponenten oder ausgefallene Teile nicht den Gesamtbetrieb des Systems stören können. Das System arbeitet bis zum Ausfall zweier gleichartiger Komponenten fehlertolerant. Die Wahrscheinlichkeit dafür ist jedoch derart gering, daß die vorgeschlagene Rechenarchitektur einen hohen Zuverlässigkeitsgrad hat.

Weiterbildungen der Erfindung sind durch die in den Unteransprüchen angegebenen Merkmale gekennzeichnet.

Im folgenden wird die Erfindung anhand einer ein Ausführungsbeispiel für die erfindungsgemäße Rechnerarchitektur darstellenden Figur erläutert.

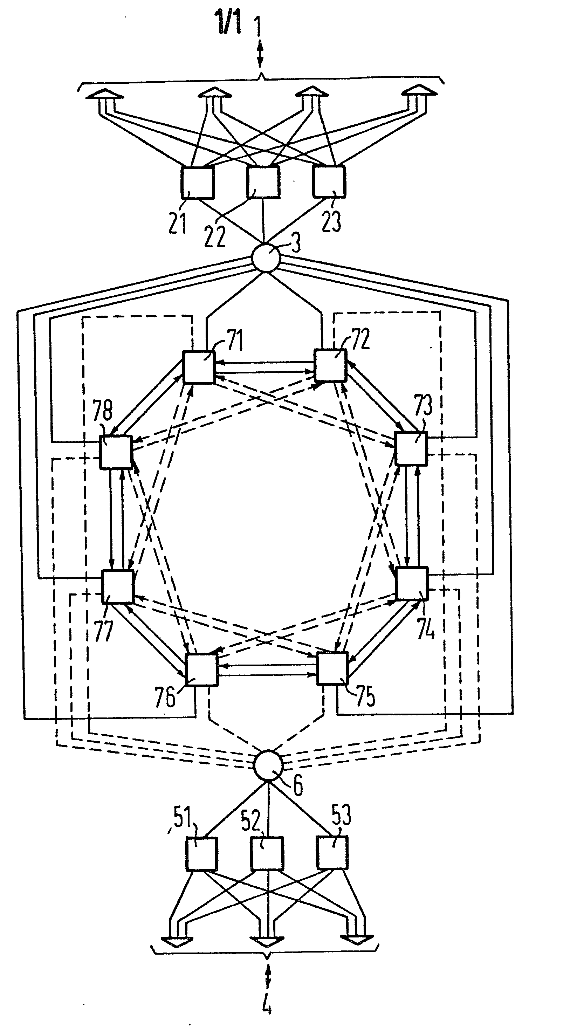

Die Figur zeigt einen teilvermaschten Ring mit Mikrocomputern 71...78, in dem jeweils Leitungen für einen Datenaustausch zwischen zwei unmittelbar benachbarten Mikrocomputern, z.B. 71 und 72 und Leitungen zwischen jeweils einem Mikrocomputer des Ringes, z.B. 71 mit einem in dem Ring an relativ zu diesem genannten Mikrocomputer übernächster Stelle angeordneten weiteren Mikrocomputer, z.B. 73, für einen Datenaustausch vorgesehen sind. Alle Eingabe-/Ausgabe-Schnittstellen aller Mikrocomputer 71...78 sind über einen vorzugsweise als einstufiges Koppelnetzwerk ausgeführten Peripherie-Schalter 3 mit Gerätekontrollern 21, 22, 23 bzw. über einen ebenfalls vorzugsweise als einstufiges Koppelnetzwerk ausgeführten Benutzer-Schalter 6 mit weiteren Gerätekontrollern 51, 52, 53 verbunden. Die Gerätekontroller 21, 22, 23 bzw. 51, 52, 53 sind jeweils mit den Peripherie-Leitungen an der Schnittstelle 1 ausgangsseitig so verbunden, daß jede Peripherie-Leitung mit jedem Gerätekontroller 21, 22, 23 verbunden ist, bzw. daß jede Benutzer-Leitung an der Schnittstelle 4 ausgangsseitig mit jedem Gerätekontroller 51, 52, 53 verbunden ist. Die jeweils in einer Dreierkombination angeordneten Gerätekontroller 21, 22, 23 bzw. 51, 52, 53 steuern den Datenfluß zwischen dem zentralen Ring und der Peripherie- bzw. der Benutzerebene. Bei einer Verfälschung während einer Datenübertragung wird durch eine "2 von 3"-Mehrheitsentscheidung die aufgetretene Verfälschung eliminiert. Die Aufgaben sind bei der gezeigten Anordnung je nach ihrer Mächtigkeit auf beliebige Mikrocomputer des Ringes verteilbar. Ein Ausfall eines Mikrocomputers, z.B. 71, wird von dem diesem Mikrocomputer unmittelbar benachbarten Mikrocomputer, z.B. 72, registriert. Aufgrund der vorgesehenen Teilvermaschung des Ringes ist in diesem Falle der ausgefallene Mikrocomputer, z.B. 71, bei der weiteren Aufgabenverteilung überspringbar.

Die Gerätekontroller 21, 22, 23; 51, 52, 53 sind vorzugsweise prozessorgesteuert.

4 Patentansprüche
1 Figur

Patentansprüche

1. Rechnerarchitektur auf der Basis einer Multi-Mikrocomputerstruktur als fehlertolerantes System, bei der mehrere Mikrocomputer vorgesehen sind, die sich gegenseitig vertreten können, und bei der zur Steuerung der Aufgabenverteilung für die Mikrocomputer das Prinzip der "2 von 3"-Entscheidung verwendet wird, d a d u r c h   g e k e n n - z e i c h n e t ,  daß die Mikrocomputer (71...78) in einem teilvermaschten Ring angeordnet sind, derart, daß jeweils ein Datenaustausch zwischen zwei in dem Ring benachbarten Mikrocomputern (z.B. 71, 72) und/oder zwischen einem beliebigen Mikrocomputer (z.B. 71) und einem in dem Ring relativ zu diesem genannten Mikrocomputer (71) an übernächster Stelle angeordneten weiteren Mikrocomputer (z.B. 73) durchführbar ist, und daß jeweils an den Schnittstellen "Rechner/Benutzer" (4) und "Rechner/Peripherie" (1) drei jeweils eingangsseitig mit allen Peripherie-Leitungen bzw. drei jeweils eingangsseitig mit allen Benutzer-Leitungen verbundene Gerätekontroller (21, 22, 23 bzw. 51, 52, 53) vorgesehen sind, die jeweils ausgangsseitig über einen vorzugsweise als einstufiges Koppelnetzwerk ausgeführten passiven Peripherie-Schalter (3 bzw. 6) mit den Eingabe-/Ausgabe-Schnittstellen aller Mikrocomputer (71...78) verbindbar sind, wobei die jeweilige Konfiguration Mikrocomputer/Peripherie bzw. Mikrocomputer/Benutzer mittels einer bei auftretenden Datenübertragungsfehlern durchzuführenden "2 von 3"-Mehrheitsentscheidung festlegbar ist.

2. Rechnerarchitektur nach Anspruch 1, d a d u r c h g e k e n n z e i c h n e t ,  daß die Aufgaben auf die Mikrocomputer (71...78) entsprechend ihrer jeweiligen Mächtigkeit verteilbar sind.

3. Rechnerarchitektur nach Anspruch 1, d a d u r c h
g e k e n n z e i c h n e t , daß bei Ausfall eines Mikrocomputers (z.B. 71), welcher Ausfall von einem unmittelbar benachbarten Mikrocomputer (z.B. 72) registriert wird, der ausgefallene Mikrocomputer (71) bei der weiteren Aufgabenverteilung aufgrund der Teilvermaschung des Ringes überspringbar ist.

4. Rechnerarchitektur nach Anspruch 1, d a d u r c h
g e k e n n z e i c h n e t , daß die Gerätekontroller (21, 22, 23; 51, 52, 53) prozessorgesteuert sind.

**1/1**